# EUROPÄISCHE PATENTANMELDUNG

(11) **EP 4 350 539 A1**
(43) Veröffentlichungstag der Anmeldung: **10.04.2024**
(21) Anmeldenummer: 22199487.4
(22) Anmeldetag: 04.10.2022
(51) Int. Cl.: G06F 18/243, G06T 7/00, G06V 10/22, G06V 10/25, G06V 10/75, G06V 10/82, G06V 30/146, G06V 30/148, G06N 3/045

(54) **VERFAHREN UND SYSTEM ZUM AUTOMATISCHEN BILDBASIERTEN ERKENNEN EINER IDENTIFIKATIONSINFORMATION AN EINEM OBJEKT**

(71) Anmelder: Primetals Technologies Germany GmbH, 91058 Erlangen (DE)
(72) Erfinder: Sparrer, Susanne, 91054 Erlangen (DE); Wassermann, Dominik, 86150 Augsburg (DE)
(74) Vertreter: Metals@Linz

(57) **Zusammenfassung**

Die vorliegende Erfindung betrifft ein Verfahren (100) und ein System (1) zum automatischen Erkennen einer Identifikationsinformation (2; 2a, 2b) auf einem Objekt (3; 3a, 3b). Dabei wird ein Bild (5) bereitgestellt (S1), auf dem ein an einer Position (7; 7a, 7b) ein Objekt (3; 3a, 3b) abgebildet ist. Zudem wird ein Bereich (9) an der Position (7; 7a, 7b), in dem das Objekt (3; 3a, 3b) eine Zeichenkette (10) aufweist, mithilfe eines ersten neuronalen Netzes (8) ermittelt. Die Zeichenkette (10) wird in eine vorgegebene Ausrichtung (21) transformiert (T). Die Zeichenkette (10) wird schließlich mithilfe eines zweiten neuronalen Netzes (13) gelesen und eine auf der gelesenen Zeichenkette (10) basierenden Identifikationsinformation (2; 2a, 2b) des Objekts (3; 3a, 3b) ausgegeben (S9).

## Beschreibung

### Gebiet der Technik

Die vorliegende Erfindung betrifft ein Verfahren und ein System zum automatischen Erkennen einer Identifikationsinformation auf einem Objekt.

### Stand der Technik

Eine Verarbeitung von Objekten, zum Beispiel von Halbzeugen zur Herstellung eines Endprodukts, erfolgt üblicherweise in mehreren aufeinanderfolgenden Arbeitsschritten. In den einzelnen Arbeitsschritten ist es wichtig, dass das gegenwärtig verarbeitete Objekt auch demjenigen Objekt entspricht, das zur Verarbeitung vorgesehen ist, da dem gegenwärtig bearbeiteten Objekt ansonsten falsche technische Eigenschaften zugeordnet werden könnten. Solche als "Materialverwechselungen" bezeichnete fehlerhafte Zuordnungen sind für Anlagenbetreiber oft sehr kostspielig, da sie zu schwerwiegenden Fehlern im Verarbeitungsprozess führen können.

Problematisch ist, dass sich eine Reihenfolge der Objekte im Verarbeitungsprozess üblicherweise ändert. Beispielsweise werden in einem Kaltwalzwerk sogenannte "Coils", d. h. aufgerollte Metallbänder, die an einem anderen Standort vorproduziert werden, häufig per Zug angeliefert. Es kann jedoch passieren, dass die Waggons des Zuges in der falschen Reihenfolge an einem Umschlagort einfahren, wodurch sich die Reihenfolge der Coils ändert. Eine weitere Änderung der Reihenfolge kann sich auch ergeben, wenn beim Abladen der Coils von den Waggons per Kran in ein Zwischenlager oder bei der Entnahme der Coils aus dem Zwischenlager eine Verwechslung auftritt. In der Folge kann es passieren, dass zum Beispiel eine Beizstraße des Kaltwalzwerks mit falschen, nicht zum gerade verarbeiteten Coil passenden Parametern betrieben wird, was zur Beschädigung des Metallbands oder der Anlage führen kann.

Daher ist vor Beginn eines jeden Verarbeitungsschrittes die korrekte Identifikation des Objekts und eine Überprüfung, ob es sich um das erwartete Objekt handelt, erforderlich. Dies bedeutet einen Mehraufwand im Prozess.

Um eine Materialverfolgung zu ermöglichen und sicherstellen zu können, dass im gegenwärtigen Verarbeitungsschritt tatsächlich das gewünschte Objekt verarbeitet wird, hat es sich bewährt, jedem Objekt eine Identifikationsinformation zum Beispiel in Form einer Zeichenkette zuzuordnen. Zweckmäßigerweise ist diese Identifikationsinformation auf den Objekten angebracht, etwa aufgedruckt, aufgemalt oder aufgesprüht. Zu verarbeitende Coils werden zum Beispiel mit einer auf ihrer Stirnseite aufgebrachten Identifikationsnummer gekennzeichnet. Problematisch hierbei ist, dass eine solche Identifikationsinformation abhängig vom Objekttyp, zum Beispiel dessen Form, Material und/oder Oberflächentextur, schlecht lesbar sein kann. Insbesondere eine Maschinenlesbarkeit kann zum Beispiel durch eine formbedingte Verzerrung oder eine inhomogene Objektoberfläche beeinträchtigt sein.

### Zusammenfassung der Erfindung

Es ist eine Aufgabe der vorliegenden Erfindung, die Identifikation von Objekten zu verbessern, insbesondere zu automatisieren. Es ist insbesondere eine Aufgabe der vorliegenden Erfindung, ein Verfahren und ein System anzugeben, mit dem ein Objekt vor einem Verarbeitungsschritt, in dem das Objekt verarbeitet wird, zuverlässig identifizierbar ist.

Diese Aufgabe wird gelöst durch ein Verfahren und ein System zum automatisierten Erkennen einer Identifikationsinformation auf einem Objekt gemäß den unabhängigen Ansprüchen.

Bevorzugte Ausführungsformen sind Gegenstand der abhängigen Ansprüche und der folgenden Beschreibung.

Ein, vorzugsweise computerimplementiertes, Verfahren gemäß einem ersten Aspekt der Erfindung zum automatisierten Erkennen einer Identifikationsinformation auf einem Objekt weist die folgenden Schritte auf: i) Bereitstellen wenigstens eines digitalen Bildes, auf dem an einer Position ein Objekt abgebildet ist; ii) an der Position des Objekts im Bild, Ermitteln eines Bereichs, in dem das Objekt eine Zeichenkette aufweist, mithilfe eines ersten neuronalen Netzes in einem Zeichenerkennungsschritt; iii) Transformieren der Zeichenkette in eine vorgegebene Ausrichtung in einem Korrekturschritt; iv) Lesen der Zeichenkette in der vorgegebenen Ausrichtung mithilfe eines zweiten neuronalen Netzes in einem Leseschritt; und vii) Ausgeben einer auf der gelesenen Zeichenkette basierenden Identifikationsinformation des Objekts.

Eine Identifikationsinformation im Sinne der vorliegenden Erfindung ist vorzugsweise eine Information, die eine eindeutige Identifikation eines Objekts ermöglicht. Die Identifikationsinformation kann eine ID, zum Beispiel eine Zahlen- und/oder Buchstabenfolge, enthalten. Die Identifikationsinformation kann insbesondere die im Leseschritt gelesene Zeichenkette enthalten, dieser Zeichenkette entsprechen oder aus dieser Zeichenkette abgeleitet sein.

Ein Aspekt der Erfindung basiert auf dem Ansatz, die automatische Identifikation eines Objekts anhand einer Identifikationsinformation zu ermöglichen, die auf einer auf dem Objekt angeordneten Zeichenkette basiert. Dazu werden zweckmäßigerweise wenigstens zwei verschiedene neuronale Netze eingesetzt. Diese neuronalen Netze sind vorteilhaft auf unterschiedliche Erkennungsprozesse spezialisiert. Beispielsweise kann ein optionales drittes neuronales Netz vorgesehen sein, um das Objekt auf einem Bild zu erkennen und seine Position auf dem Bild zu ermitteln. Ein erstes neuronales Netz kann dann gezielt einen Bereich an der Position des Objekts ermitteln, in dem das erkannte Objekt die Zeichenkette aufweist. Die Zeichenkette wird vorzugsweise von einem zweiten neuronalen Netz gelesen. D. h., dass vorzugsweise erst das zweite neuronale Netz die einzelnen Zeichen der Zeichenkette bzw. deren Bedeutung erkennt. Ein derartiger Einsatz des ersten und zweiten und optional dritten neuronalen Netzes kann sowohl die Effektivität als auch die Effizienz bei der Identifikation des Objekts erhöhen. Zum Beispiel lassen sich durch die spezifisch trainierten neuronalen Netze die Position des Objekts und der Objektbereich mit der Zeichenkette besonders präzise und zuverlässig ermitteln und die Zeichenkette in diesem Objektbereich besonders präzise und zuverlässig auslesen. Gleichzeitig kann die Suche nach dem Objektbereich mit der Zeichenkette auf die Position des erkannten Objekts beschränkt werden, d. h. auf den durch die Kontur des Objekts definierten Bereich. Ebenso kann das Auslesen der Zeichenkette auf den ermittelten Bereich an der Objektposition beschränkt werden.

Die Spezialisierung insbesondere des zweiten neuronalen Netzes, d. h. sein aufgabenspezifisches Training, kann besonders stark ausgeprägt sein, indem im Bedarfsfall eine Korrektur der Ausrichtung der Zeichenkette im mithilfe des ersten neuronalen Netzes ermittelten Bereichs vorgesehen wird. Befindet sich die Zeichenkette im ermittelten Bereich nicht in einer vorgegebenen Ausrichtung, etwa einer zeilenförmigen und horizontalen Ausrichtung, ist es zweckmäßig, die Zeichenkette in die vorgegebene Ausrichtung zu transformieren. Dies kann das Lesen der Zeichenkette durch das zweite neuronale Netz erheblich erleichtern. Insbesondere kann das zweite neuronalen Netz darauf spezialisiert sein, vornehmlich Zeichenketten in der vorgegebenen Ausrichtung zu lesen. Dadurch lässt sich zumindest die Qualität und Zuverlässigkeit der erzielten Ergebnisse gegenüber konventionellen Verfahren zur Objektidentifikation erhöhen, wenn nicht dadurch eine automatisierte Identifikation überhaupt erst möglich wird.

Zum Beispiel ist aufgrund der im Querschnitt runden Form von Coils die auf ihren Stirnseiten aufgebrachte, üblicherweise aufgesprühte oder aufgemalte, Identifikationsnummer gekrümmt. Anders gesagt verläuft die Identifikationsnummer bogenförmig. Die Identifikationsnummer kann außerdem aufgrund der Oberflächenbeschaffenheit der Stirnseite, die sich aus den Rändern der einzelnen Lagen des aufgewickelt Metallbands ergibt, schwer lesbar sein. Konventionelle Algorithmen zur optischen Zeichenerkennung (im Englischen als Optical Character Recognition, kurz OCR, bezeichnet), die den Schriftzug in einem bereitgestellten Bild gegebenenfalls auch erst noch auffinden müssen, scheitern daher regelmäßig an der korrekten Erkennung derart angeordneter Zeichen. Aus diesem Grund wird die Identifikation von Coils bei deren Verarbeitung bislang regelmäßig von Bedienpersonal durchgeführt, oder es erfolgt keine Überwachung der IDs unter der Annahme, dass die angenommene Reihenfolge der Coils korrekt ist.

Das vorgeschlagene Verfahren, insbesondere das Vorsehen von wenigstens zwei verschiedenen spezialisierten neuronalen Netzen und die zusätzliche Entzerrung der Zeichenkette im ermittelten Bereich an der Objektposition, ermöglicht dagegen ein zuverlässiges maschinelles Lesen der Zeichenkette und infolge dessen auch eine automatisierte Identifikation von Coils.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird in einem Authentifizierungsschritt geprüft, ob die gelesene Zeichenkette und/oder die Identifikationsinformation mit einer von mehreren vorgegebenen Zeichenketten aus einer Liste übereinstimmt. Anders gesagt kann geprüft werden, ob die gelesene Zeichenkette und/oder die Identifikationsinformation in der Liste enthalten ist. Dadurch lässt sich die gelesene Zeichenkette und/oder die Identifikationsinformation validieren: stimmt die gelesene Zeichenkette und/oder die Identifikationsinformation mit einer in der Liste aufgeführten Zeichenkette überein, kann mit an Sicherheit grenzender Wahrscheinlichkeit davon ausgegangen werden, dass das zweite neuronale Netz die Zeichenkette im Leseschritt fehlerfrei gelesen hat bzw. die Identifikationsinformation korrekt auf Grundlage der gelesenen Zeichenkette ermittelt wurde.

Stimmt die gelesene Zeichenkette mit keiner der mehreren vorgegebenen Zeichenketten überein, kann dies ein Hinweis darauf sein, dass die Zeichenkette auf dem Objekt vom zweiten neuronalen Netz nicht korrekt gelesen wurde. Gegebenenfalls kann die gelesene Zeichenkette dann verworfen und anhand eines weiteren bereitgestellten Bildes erneut versucht werden, die Zeichenkette zu lesen. Alternativ oder zusätzlich kann auch eine manuelle Prüfung der auf dem Objekt angeordneten Zeichenkette durch Bedienpersonal erfolgen.

Stimmt dagegen die auf Grundlage der gelesenen Zeichenkette - und gegebenenfalls weiterer gelesener Zeichenketten, wie weiter unten ausführlich beschrieben wird - ermittelte Identifikationsinformation mit keiner der mehreren vorgegebenen Zeichenketten überein, kann dies ein Hinweis auf eine Verwechslung zum Beispiel bei der Entnahme eines gewünschten Objekts aus einem Lager sein. Gegebenenfalls lässt sich in diesem Fall der Bearbeitungsprozess unter- oder abbrechen. Alternativ kann die Liste modifiziert werden, wie weiter unten noch ausführlicher beschrieben wird.

Bei den mehreren vorgegebenen Zeichenketten kann es sich um die Identifikationsnummern aller Objekte handeln, die in einem Arbeitsschritt verarbeitet werden sollen. Die Liste kann etwa einem Lieferschein, einer Inventarliste eines (Zwischen-)Lagers oder einem Prozessplan, in dem zur Herstellung eines oder mehrerer gewünschter Produkte benötigte Objekte (Halbzeuge) aufgeführt sind, entsprechen.

Um eine gewünschte Reaktion auf die erfolgreiche oder nicht erfolgreiche Validierung der gelesenen Zeichenkette und/oder der Identifikationsinformation einleiten zu können, ist es zweckmäßig, dass die Identifikationsinformation in Abhängigkeit eines Ergebnisses der Prüfung im Authentifizierungsschritt ausgegeben wird. Beispielsweise kann es vorgesehen sein, dass die Identifikationsinformation nur dann ausgegeben wird, wenn die gelesene Zeichenkette und/oder die Identifikationsinformation mit einer der vorgegebenen Zeichenketten aus der Liste übereinstimmt. Alternativ kann auch vorgesehen sein, dass die Identifikationsinformation einen Hinweis auf die erfolgreiche oder nicht erfolgreiche Validierung enthält oder der Identifikationsinformation ein solcher Hinweis vor deren Ausgabe hinzugefügt wird.

Infolgedessen wird die Identifikationsinformation in einer weiteren bevorzugten Ausführungsform zunächst in einem Ermittlungsschritt auf Grundlage der gelesenen Zeichenkette ermittelt und der ermittelten Identifikationsinformation nach dem Authentifizierungsschritt eine Information darüber hinzugefügt, ob die gelesene Zeichenkette und/oder die Identifikationsinformation in der Liste enthalten ist. Im Ermittlungsschritt können, wie weiter unten noch ausführlicher beschrieben wird, auch mehrere aus verschiedenen Bildern desselben Objekts gelesene Zeichenketten die Grundlage für die Ermittlung der Identifikationsinformation bilden.

Die Liste kann jedoch nicht nur zur voranstehend beschriebenen Validierung der gelesenen Zeichenkette und/oder Identifikationsinformation verwendet werden. Es ist auch denkbar, die Identifikationsinformation zur Prüfung einer Reihenfolge der in der Liste aufgeführten vorgegebenen Zeichenketten zu verwenden. In einer weiteren bevorzugten Ausführungsform kann die Identifikationsinformation beispielsweise bei einer Prüfung, ob eine Reihenfolge zumindest eines Teils der mehreren vorgegebenen Zeichenketten mit einer Reihenfolge übereinstimmt, die sich aus in früheren Leseschritten bereits gelesenen Zeichenketten ergibt, berücksichtigt werden. Die früheren Leseschritte stehen dabei vorzugsweise im Zusammenhang mit zu einem früheren Zeitpunkt erkannten Objekten. Liegt für jedes dieser früher erkannten Objekte eine auf Grundlage der entsprechenden gelesenen Zeichenkette ermittelte Identifikationsinformation vor, ergibt sich daraus eine Reihenfolge, die mit der Reihenfolge der vorgegebenen Zeichenketten in der Liste verglichen werden kann. Folglich lässt sich somit die Abfolge der Verarbeitung verschiedener Objekte überwachen oder, falls gewünscht, die Reihenfolge der vorgegebenen Zeichenketten in der Liste neu festlegen.

Beispielsweise kann so beim Entladen von Coils überprüft und gegebenenfalls berücksichtigt werden, ob bzw. dass die Coils mit einem in umgekehrter Wagenreihung operierenden Zug transportiert wurden. Stimmt die Reihenfolge der Identifikationsnummern der entladenen Coils mit der Reihenfolge in einem Lieferschein überein, können die Coils direkt in ein Zwischenlager verbracht werden. Andernfalls kann die fehlerhafte Reihenfolge beim Verbringen in das Zwischenlager korrigiert werden. Alternativ kann auch die Reihenfolge auf dem Lieferschein oder in einer Inventarliste des Zwischenlagers an die festgestellte geänderte Reihenfolge angepasst werden.

In einer weiteren Ausführungsform ist es daher bevorzugt, dass die Liste mit den mehreren vorgegebenen Zeichenketten in Abhängigkeit der Identifikationsinformation modifiziert wird. Dadurch können Materialverwechslung bei der Weiterverarbeitung des Objekts vermieden werden.

Die Prüfung der tatsächlichen Reihenfolge von mehreren Objekten bzw. der Abgleich mit einer Reihenfolge von vorgegebenen Zeichenketten auf der Liste setzt voraus, dass auch mehrere, den mehreren Objekten zugeordnete Zeichenketten gelesen werden. Dazu können der Zeichenerkennungsschritt, der Korrekturschritt, der Leseschritt und optional auch das Ausgeben der auf der gelesenen Zeichenkette basierenden Identifikationsinformation für mehrere im bereitgestellten Bild vorhandene Objekte durchgeführt werden. Zeigt das bereitgestellte Bild beispielsweise mehrere nebeneinander auf einer Fördereinrichtung oder einem Waggon angeordnete Coils, kann für jeden dieser Coils eine Zeichenkette gelesen werden. Zweckmäßigerweise wird die Reihenfolge mehrerer im Bild vorhandenen Objekte durch die, gegebenenfalls in einem Objekterkennungsschritt ermittelten, Positionen der Objekte relativ zueinander ermittelt.

Alternativ oder zusätzlich wird in einer weiteren bevorzugten Ausführungsform das wenigstens eine Bild aus einem Bildstrom herausgegriffen. Der Bildstrom kann ein zumindest im Wesentlichen kontinuierlicher Bildstrom mit hoher zeitlicher Auflösung, zum Beispiel mehr als 30 Bilder pro Sekunde, sein. Alternativ kann sich der Bildstrom aber auch aus mehreren, zeitlich deutlich weiter voneinander beabstandeten Bildern zusammensetzen. Der Bildstrom kann sich zum Beispiel aus mehreren von einer Objekterfassungsvorrichtung bereitgestellten Bildern zusammensetzen. Zweckmäßigerweise bildet der Bildstrom einen Transportvorgang der Objekte ab, sodass nach und nach mehrere Objekte in einzelnen Bildern aus dem Bildstrom erkennbar und deren jeweilige Zeichenkette auslesbar ist.

Beispielsweise kann der Bildstrom von einer Kamera oder einem anderen optischen Sensor erzeugt werden, deren bzw. dessen Erfassungsbereich eine Fördereinrichtung für Coils umfasst. Für jede der nacheinander mittels der Fördereinrichtung transportierten Coils kann aus wenigstens einem Bild des Bildstroms, dass die jeweilige Coil zeigt, die zugeordnete Zeichenkette gelesen und optional die entsprechende Identifikationsinformation ausgegeben werden.

Dazu wird in einer weiteren bevorzugten Ausführungsform eine Schrittfolge zumindest aus Zeichenerkennungsschritt, Korrekturschritt und Leseschritt mehrmals hintereinander für verschiedene Bilder aus dem Bildstrom herausgegriffene Bilder durchgeführt. Die herausgegriffenen Bilder können, müssen jedoch im Bildstrom nicht unmittelbar aufeinander folgen. In Abhängigkeit der zeitlichen Auflösung des Bildstroms und/oder der Transportgeschwindigkeit der Fördereinrichtung können auch nur in vorgegebenen zeitlichen Abständen aufgenommene Bilder mit der genannten Schrittfolge verarbeitet werden.

Alternativ oder zusätzlich zur Prüfung der Reihenfolge der Zeichenketten verschiedener nacheinander erfasster Objekte kann die beschriebene Schrittfolge auch vorteilhaft dazu eingesetzt werden, die Zuverlässigkeit der Identifikationsinformation und damit die Identifikation eines einzelnen Objekts zu erhöhen. Vorzugsweise wird zu diesem Zweck die Identifikationsinformation auf Grundlage der in den mehreren Leseschritten gelesenen Zeichenketten ermittelt, zum Beispiel in dem bereits erwähnten Ermittlungsschritt. Beispielsweise kann die Zeichenkette in mehreren, gegebenenfalls unmittelbar aufeinanderfolgenden, aus dem Bildstrom herausgegriffenen Bildern, in denen jeweils dasselbe Objekt abgebildet ist, gelesen werden. Jede dieser derart gelesenen Zeichenketten kann dann bei der Ermittlung der Identifikationsinformation berücksichtigt werden. Es ist zum Beispiel denkbar, dass die derart gelesenen Zeichenketten als Eingangsgrößen einer Funktion dienen, die aus den Zeichenketten eine als Identifikationsinformation auswählt oder eine neue Zeichenkette als Identifikationsinformation aus Teilen der gelesenen Zeichenketten zusammensetzt.

Dabei ist es bevorzugt, dass die Identifikationsinformation auf Grundlage eines Vergleichs der in den mehreren Leseschritten gelesenen Zeichenketten untereinander ermittelt wird. Dadurch lässt sich eine in einzelnen Bildern möglicherweise schlechte Lesbarkeit der Zeichenkette ausgleichen. Ist die Zeichenkette beispielsweise auf einem unregelmäßigen Untergrund angeordnet, kann die Lesbarkeit der Zeichenkette durch Abschattungen und/oder Verzerrungen in bestimmten Positionen des Objekts relativ zur Objekterfassungsvorrichtung stark beeinträchtigt sein. Durch den Vergleich der mehreren in unterschiedlichen Bildern gelesenen Zeichenketten fällt diese schlechte Lesbarkeit nicht oder zumindest weniger stark ins Gewicht.

Eine effektive Möglichkeit zum Ermitteln der Identifikationsinformation auf Grundlage der in den mehreren Leseschritten gelesenen Zeichenketten besteht darin, eine Häufigkeit von unterschiedlichen, in den mehreren Leseschritten gelesenen Zeichenketten zu ermitteln. Alternativ dazu kann auch eine Häufigkeit von unterschiedlichen, in den mehreren Leseschritten gelesenen Zeichenketten an derselben Stelle vorkommenden Zeichen ermittelt werden. Beispielsweise kann eine Häufigkeitsverteilung für die unterschiedlichen Zeichenketten oder für verschiedene Zeichen an derselben Stelle in den unterschiedlichen Zeichenketten und anschließend ein Maximum dieser Häufigkeitsverteilung ermittelt werden.

Zweckmäßigerweise wird die Identifikationsinformation auf Grundlage der ermittelten Häufigkeit ermittelt. Beispielsweise kann aus der Häufigkeitsverteilung die am häufigsten vorkommende Zeichenkette bzw. eine aus den am häufigsten vorkommenden Zeichen zusammengesetzte Zeichenkette als Identifikationsinformation ermittelt werden.

Ist, wie voranstehend bereits beschrieben wurde, eine Liste mit mehreren vorgegebenen Zeichenketten vorhanden, ergibt sich eine alternative Möglichkeit zum Ermitteln der Identifikationsinformation. In dieser weiteren bevorzugten Ausführungsform wird eine Distanz einer Metrik auf dem Raum der Symbolsequenzen, zum Beispiel eine Levenshtein-Distanz oder eine Hamming-Distanz, für jede der in den mehreren Leseschritten gelesenen Zeichenketten zu jeder der mehreren vorgegebenen Zeichenketten aus der Liste ermittelt. Damit lässt sich die Ähnlichkeit einer aus einem der mehreren verschiedenen, aus dem Bildstrom herausgegriffenen Bilder gelesenen Zeichenkette mit den vorgegebenen Zeichenketten bestimmen. Insbesondere kann für jede aus einem Bild gelesene Zeichenkette festgestellt werden, zu welcher von den vorgegebenen Zeichenketten die größte Ähnlichkeit besteht.

Zweckmäßigerweise wird die Identifikationsinformation in Abhängigkeit der ermittelten Distanzen ermittelt. Beispielsweise kann geprüft werden, für welche der gelesenen Zeichenketten die Distanz zu einem Eintrag der Liste am kleinsten ist. Die mit der kleinsten Distanz korrespondierende(n) gelesene(n) Zeichenkette(n) kann dann als Identifikationsinformation ausgegeben werden.

Um die Ermittlung des Bereichs, in dem das Objekt eine Zeichenkette aufweist, effizienter gestalten zu können, wird vorzugsweise in einem Objekterkennungsschritt die Position des Objekts auf dem Bild mithilfe des dritten neuronalen Netzes ermittelt. Dadurch ist es nicht notwendig, dass sich das Objekt beim Aufnehmen des Bilds an einer vorgegebenen Position befindet. Vielmehr kann das Objekt auch während einer Bewegung, etwa beim Transport mit einem Waggon oder einer anderen Fördereinrichtung, erkannt und im Folgenden identifiziert werden.

Insbesondere wenn auf den aus den Bildstrom herausgegriffenen Bildern mehrere zu identifizierende Objekte abgebildet sind, ist es zum Beispiel für einen Vergleich mehrerer für eines dieser Objekte gelesenen Zeichenketten vorteilhaft, das Objekt zu verfolgen (im englischen als Tracken bezeichnet). Beispielsweise kann die Trajektorie des Objekts, etwa dessen Transportweg, durch den Erfassungsbereich der Objekterfassungsvorrichtung ermittelt und/oder aufgezeichnet werden. Dazu wird in einer weiteren bevorzugten Ausführungsform wenigstens der Objekterkennungsschritt mehrmals hintereinander für verschiedene Bilder aus dem Bildstrom durchgeführt und die in den Objekterkennungsschritten ermittelten Positionen zur Nachverfolgung des Objekts miteinander verknüpft.

Ist davon auszugehen, dass die Ausrichtung der Zeichenkette in dem ermittelten Bereich zwischen verschiedenen Objekten variiert, ist es vorteilhaft, wenn in einem Prüfschritt geprüft wird, ob die Zeichenkette im ermittelten Bereich die vorgegebene Ausrichtung aufweist. Die Transformation im Korrekturschritt wird dann zweckmäßigerweise in Abhängigkeit eines Ergebnisses der Prüfung im Prüfschritt durchgeführt.

Es hat sich gezeigt, dass Zeichenketten - wenn überhaupt - besonders dann präzise und zuverlässig lesbar sind, wenn sie zeilenförmig ausgerichtet sind. Der Grund hierfür ist, dass bei zeilenförmig ausgerichteten Zeichenketten hochspezialisierte neuronale Netze zur Zeichenerkennung zum Einsatz kommen können. Daher ist es in einer weiteren Ausführung bevorzugt, dass die Zeichenkette im Korrekturschritt zeilenförmig ausgerichtet wird. Beispielsweise kann die Zeichenkette oder der die Zeichenkette enthaltende, im Zeichenerkennungsschritt ermittelte Bereich transformiert werden, was im Englischen als Warping bezeichnet wird.

Ein System gemäß einem zweiten Aspekt der Erfindung zum automatisierten Erkennen einer Identifikationsinformation auf einem Objekt weist eine Objekterfassungsvorrichtung zum Bereitstellen wenigstens eines digitalen Bilds, auf dem an einer Position ein Objekt abgebildet ist, auf. Optional kann das System ein drittes neuronales Netz aufweisen, das zum Ermitteln einer Position des Objekts, welches vorzugsweise einem vorgegebenen Objekttyp entspricht, auf dem Bild trainiert ist. Jedenfalls ist ein erstes neuronales Netz vorgesehen, dass zum Ermitteln eines Bereichs an der Position des Objekts, in dem das Objekt eine Zeichenkette aufweist, trainiert ist. Optional ist ein Prüfmodul vorgesehen zum Prüfen, ob die Zeichenkette im ermittelten Bereich eine vorgegebene Ausrichtung aufweist, sowie ein Korrekturmodul zum Transformieren der Zeichenkette in die vorgegebene Ausrichtung, gegebenenfalls in Abhängigkeit eines Ergebnisses der Prüfung. Des Weiteren weist das System ein zweites neuronales Netz auf, dass zum Lesen der Zeichenkette in der vorgegebenen Ausrichtung trainiert ist, und eine Schnittstelle zum Ausgeben einer auf der gelesenen Zeichenkette basierenden Identifikationsinformation des Objekts.

Die Objekterfassungsvorrichtung kann beispielsweise wenigstens eine Kamera und/oder einen anderen optischen Sensor aufweisen und dazu eingerichtet sein, einen Erfassungsbereich digital abzubilden, d. h. entsprechende digitale Bilder bereitzustellen. Die Objekterfassungsvorrichtung ist vorzugsweise derart angeordnet und/oder ausgebildet, dass ihr Erfassungsbereich von Objekten eines vorgegebenen Objekttyps durchlaufen wird oder solche Objekte zumindest zeitweise im Erfassungsbereich angeordnet sind oder werden. Beispielsweise kann die Objekterfassungsvorrichtung derart angeordnet und/oder ausgebildet sein, dass von einer Transportvorrichtung, etwa einem Förderband oder einem Kran, an der Objekterfassungsvorrichtung vorbei transportierte Coils erfassbar sind. Alternativ kann die Objekterfassungsvorrichtung auch derart angeordnet und/oder ausgebildet sein, dass auf einem oder mehreren Waggons eines Zugs transportierte Coils erfassbar sind.

Das dritte neuronale Netz ist - sofern es vorgesehen ist - zweckmäßigerweise ein mit einer Vielzahl an Bildern von Objekten trainiertes künstliches neuronales Netz. Um höhere Erkennungserfolge erzielen zu können, ist das dritte neuronale Netz vorzugsweise darauf trainiert, Objekte eines vorgegebenen Objekttyps in Bildern zu erkennen, zum Beispiel Coils. Entsprechend ist das dritte neuronale Netz zweckmäßigerweise ein mit einer Vielzahl an Bildern von Objekten, die einem vorgegebenen Objekttyp entsprechen, trainiertes künstliches neuronales Netz. Das dritte neuronale Netz ist vorzugsweise mittels Deep Learning trainiert.

Das erste neuronale Netz ist zweckmäßigerweise ein mit einer Vielzahl an Bildern, die einen Bereich mit einer Zeichenkette aufweisen, trainiertes künstliches neuronales Netz. Die Vielzahl an Bildern kann dabei eine Vielzahl an verschiedenen Szenarien abbilden. Die Bilder müssen beispielsweise nicht zwingend ein Objekt des vorgegebenen Objekttyps enthalten.

Das zweite neuronale Netz ist zweckmäßigerweise ein mit einer Vielzahl an Bildern, die eine Zeichenkette in der vorgegebenen Ausrichtung enthalten, trainiertes künstliches neuronales Netz. Dabei ist das zweite neuronale Netz vorzugsweise mittels Deep Learning trainiert.

Die Schnittstelle kann eine Softwareschnittstelle und/oder eine Hardwareschnittstelle aufweisen. Über die Softwareschnittstelle kann die gelesene Zeichenkette und/oder die Identifikationsinformation an ein anderes Softwaremodul und/oder ein Speichersystem übergeben werden. Über die Softwareschnittstelle kann die gelesene Zeichenkette und/oder die Identifikationsinformation beispielsweise in einer Datenbank gespeichert werden. Über die Hardwareschnittstelle, etwa einen Monitor, einen Drucker und/oder dergleichen, kann die Identifikationsinformation an Bedienpersonal ausgegeben werden.

Das System gemäß dem zweiten Aspekt der Erfindung kann hard- und/oder softwaretechnisch ausgebildet sein. Das System kann insbesondere wenigstens eine, vorzugsweise mit einem Speicher- und/oder Bussystem daten- bzw. signalverbundene, Verarbeitungseinheit aufweisen. Beispielsweise kann das System eine Mikroprozessoreinheit (CPU) oder ein Modul einer solchen und/oder ein oder mehrere Programme oder Programmmodule aufweisen. Das System kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, sodass das System zumindest einzelne Schritte solcher Verfahren ausführen kann und damit insbesondere ein Objekt anhand einer Identifikationsinformation auf dem Objekt identifizieren kann.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen, zumindest teilweise schematisch:
- FIG 1: ein Beispiel eines Systems zum automatisierten Erkennen einer Identifikationsinformation auf einem Objekt;
- FIG 2: ein Beispiel eines Bilds von Objekten mit jeweils einer Identifikationsinformation;
- FIG 3: ein Beispiel eines Bereichs an einer Objektposition, in dem eine Zeichenkette angeordnet ist;
- FIG 4: ein Beispiel einer Transformation einer Zeichenkette in eine vorgegebene Ausrichtung; und
- FIG 5: ein Beispiel eines Verfahrens zum automatisierten Erkennen einer Identifikationsinformation auf einem Objekt.

Soweit zweckdienlich, werden in den Figuren dieselben Bezugszeichen für dieselben oder einander entsprechende Elemente der Erfindung verwendet.

### Beschreibung der Ausführungsformen

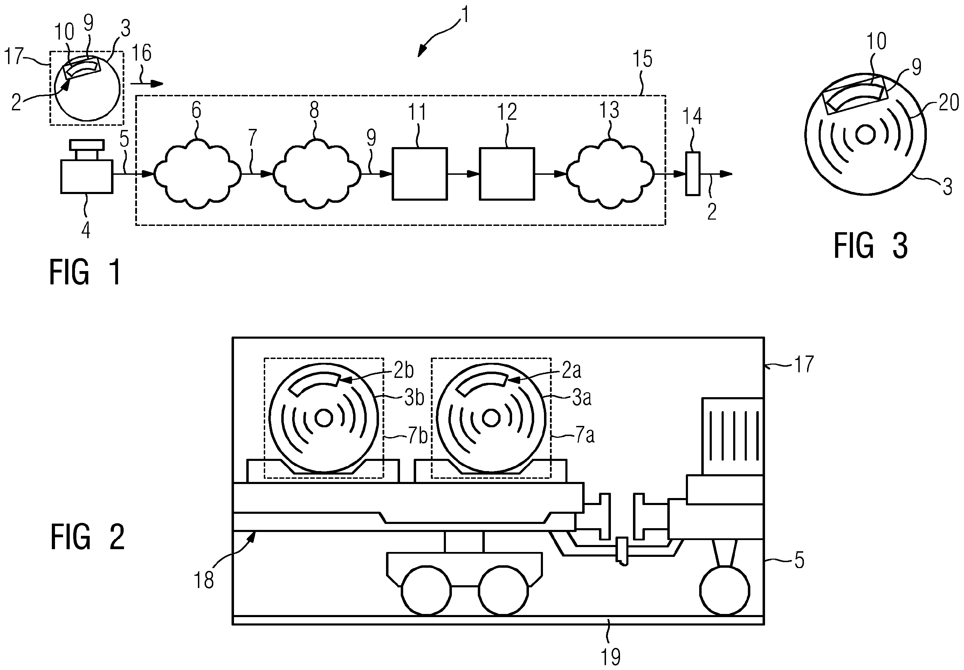

FIG 1 zeigt ein Beispiel eines Systems 1 zum automatisierten Erkennen einer Identifikationsinformation 2 auf einem Objekt 3. Das System 1 weist eine Objekterfassungsvorrichtung 4 zum Bereitstellen eines digitalen Bilds 5, ein drittes neuronales Netz 6 zum Ermitteln einer Position 7 des Objekts 3 im Bild 5, ein erstes neuronales Netz 8 zum Ermitteln eines Bereichs 9, in dem das Objekt 3 eine Zeichenkette 10 aufweist, ein Prüfmodul 11 zu prüfen, ob die Zeichenkette 10 im ermittelten Bereich 9 eine vorgegebene Ausrichtung aufweist, ein Korrekturmodul 12 zum Transformieren der Zeichenkette 10 in die vorgegebene Ausrichtung in Abhängigkeit eines Ergebnisses der Prüfung, ein zweites neuronales Netz 13 zum Lesen der Zeichenkette 10 in der vorgegebenen Ausrichtung und eine Schnittstelle 14 zum Ausgeben einer auf der gelesenen Zeichenkette basierenden Identifikationsinformation 2 des Objekts 3. Zum Ausführen von Arbeitsschritten und Operationen des dritten neuronale Netzes 6, des ersten neuronalen Netzes 8, des Prüfmoduls 11, des Korrekturmoduls 12 und/oder des zweiten neuronalen Netzes 13 ist zweckmäßigerweise wenigstens eine Rechenvorrichtung 15 vorgesehen.

Die Objekterfassungsvorrichtung 4, welche beispielsweise eine Kamera oder einen anderen optischen Sensor aufweisen kann, ist dabei vorzugsweise derart angeordnet, dass das Objekt 3 zum Beispiel mithilfe einer nicht gezeigten Transportvorrichtung an der Objekterfassungsvorrichtung 4 vorbei transportiert werden kann. Anders gesagt ist die Objekterfassungsvorrichtung 4 zweckmäßigerweise derart angeordnet, dass sie das Objekt 3 bei einer Förderung auf einem vorgegebenen Transportweg 16 erfassen kann. Bei der Erfassung des Objekts 3 erzeugt die Objekterfassungsvorrichtung 4 zweckmäßigerweise wenigstens ein digitales Bild 5 des Objekts 3.

Alternativ oder zusätzlich kann die Objekterfassungsvorrichtung 4 auch derart ausgebildet sein, dass die Objekterfassungsvorrichtung 4 das Objekt 3 bei einer Förderung auf den Transportweg 16 erfassen kann. Wie in FIG 1 gezeigt kann der Transportweg 16 beispielsweise durch einen gestrichelt dargestellten Erfassungsbereich 17 der Objekterfassungsvorrichtung 4 hindurch verlaufen.

Die Objekterfassungsvorrichtung 4 kann dazu eingerichtet sein, einen Strom von aufgenommenen Bildern 5 bereitzustellen oder zumindest einzelne Bilder 5 aus einem solchen Bildstrom herauszugreifen und bereitzustellen.

Zum Ausführen von Arbeitsschritten und Operationen des dritten neuronalen Netzes 6, des ersten neuronalen Netzes 8, des Prüfmoduls 11, des Korrekturmoduls 12 und/oder des zweiten neuronalen Netzes 13 weist die Rechenvorrichtung 15 zweckmäßigerweise einen oder mehrere Prozessoren und ein oder mehrere Speichersysteme auf (nicht gezeigt). Grundsätzlich kann jedes der neuronalen Netze 6, 8, 13 und jedes der Module 11, 12 mit separater Hardware betrieben oder durch diese Hardware realisiert sein. Es ist jedoch auch denkbar, dass sich die neuronalen Netze 6, 8, 13 und/oder die Module 11, 12 Hardware bzw. Ressourcen zumindest teilweise teilen.

Die Rechenvorrichtung 15 kann auch dazu eingerichtet sein, auf Grundlage der vom zweiten neuronalen Netz 13 gelesenen Zeichenkette 10 die Identifikationsinformation 2 zu ermitteln. Gegebenenfalls kann die Rechenvorrichtung 15 dazu ein Auswertungsmodul (nicht gezeigt) aufweisen. Dieses ist zweckmäßigerweise im Signalweg zwischen dem zweiten neuronalen Netz 13 und der Schnittstelle 14 angeordnet.

FIG 2 zeigt ein Beispiel eines digitalen Bilds 5 von Objekten 3a, 3b mit jeweils einer Identifikationsinformation 2a, 2b, die mithilfe einer Transportvorrichtung 18 transportiert werden. Die Objekte 3a, 3b entsprechen einem vorgegebenen Objekttyp. Im vorliegenden Beispiel handelt es sich bei den Objekten 3a, 3b um Coils aus aufgerolltem Metallband. Diese sind auf Waggons verladen, mit denen sie zum Beispiel in ein Kaltwalzwerk eingeliefert werden. Die Identifikationsinformation 2a, 2b ist auf einer Stirnseite der Coils angeordnet und daher auf dem Bild 5, das zum Beispiel von einer seitlich von Gleisen 19 angeordneten Objekterfassungsvorrichtung aufgenommen ist, gut sichtbar.

Die Objekte 3a, 3b des vorgegebenen Objekttyps "Coil" können von einem dritten neuronalen Netz mit hoher Zuverlässigkeit im Bild 5, d. h. letztlich im Erfassungsbereich 17 der Objekterfassungsvorrichtung, erkannt und ihre Position 7a, 7b im Bild 5 bestimmt werden. Die derart ermittelten Positionen 7a, 7b sind in FIG 2 als gestrichelte Kästen eingezeichnet.

FIG 3 zeigt ein Beispiel eines Bereichs 9, in dem ein Objekt 3 eine Zeichenkette 10 aufweist. Bei dem Objekt 3 handelt es sich rein beispielhaft um eine der Coils aus FIG 2. Die Zeichenkette 10 entspricht dabei der im Zusammenhang mit FIG 2 beschriebenen Identifikationsinformation. Der Bereich 9 ist als Kästchen mit durchgezogener Linie eingezeichnet

Der Bereich 9, in dem die Zeichenkette 10 auf dem Objekt 3 aufgebracht ist, zum Beispiel maschinell oder manuell aufgedruckt, aufgesprüht oder aufgemalt, kann von einem zweiten neuronalen Netz mit hoher Zuverlässigkeit ermittelt werden. Dabei ist es aus Effizienzgründen vorteilhaft, wenn das erste neuronale Netz nicht das gesamte in FIG 2 gezeigte Bild analysieren muss, sondern sich auf die von einem dritten neuronalen Netz ermittelte Position des Objekts 3 beschränken kann.

Zum Ermitteln des Bereichs 9 muss das erste neuronalen Netz die Zeichenkette 10 nicht lesen, d. h. die Bedeutung einzelner Zeichen der Zeichenkette 10 nicht erkennen, können. Ein derartiges Lesen der Zeichenkette 10 wird nämlich durch die gezeigte bogenförmige Ausrichtung der Zeichenkette 10 auf der im Querschnitt im Wesentlichen runden Coil erschwert. Der Lesbarkeit durch ein neuronales Netz abträglich kann zudem der unregelmäßige Untergrund sein, auf dem die Zeichenkette 10 aufgebracht ist. In FIG 3 sind einzelne Lagen 20 des Metallbands, die beim Aufwickeln zur Coil übereinander zu liegen kommen und Vertiefungen und Erhebungen auf der Stirnseite der Coil bilden können, angedeutet.

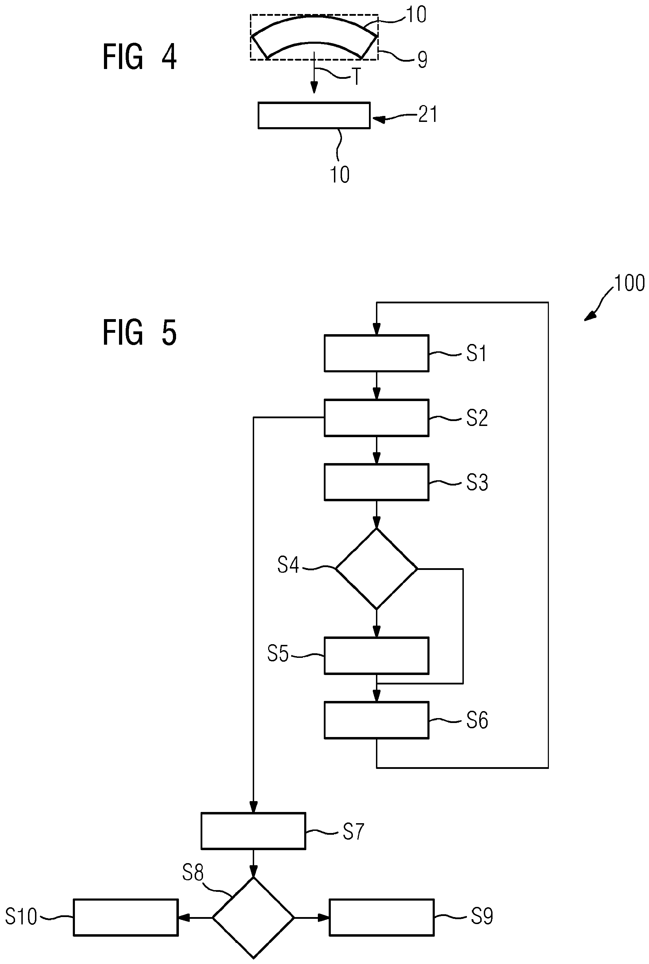

FIG 4 zeigt ein Beispiel einer Transformation T einer Zeichenkette 10 in eine vorgegebene Ausrichtung 21. Die vorgegebene Ausrichtung 21 entspricht rein beispielhaft einer horizontalen und linienartigen Ausrichtung. Die Transformation T kann eine Koordinatentransformation und/oder eine perspektivische Transformation umfassen. Die Transformation T kann durch Anwendung einer Transformationsmatrix auf einen Bereich 9, in dem die Zeichenkette 10 verläuft, durchgeführt werden.

FIG 5 zeigt ein Beispiel eines Verfahrens 100 zum automatisierten Erkennen einer Identifikationsinformation auf einem Objekt.

In einem Verfahrensschritt S1 wird ein digitales Bild bereitgestellt. Zweckmäßigerweise wird das Bild aus einem Bildstrom einer Objekterfassungsvorrichtung herausgegriffen.

In einem Objekterkennungsschritt S2 wird mithilfe eines dritten neuronalen Netzes eine Position eines Objekts auf dem Bild ermittelt. Das Objekt gehört dabei vorzugsweise einem vorgegebenen Objekttyp, zum Beispiel zu Coils aufgewickelten Metallbändern, an. Daher ist es vorteilhaft, dass das dritte neuronalen Netz spezifisch auf das Erkennen von Objekten des vorgegebenen Objekttyps trainiert ist oder wird. Das dritte neuronalen Netz muss insbesondere nicht zwingend in der Lage sein, Objekte eines anderen Objekttyps zu erkennen.

In einem Zeichenerkennungsschritt S3 wird an der ermittelten Position mithilfe eines ersten neuronalen Netzes ein Bereich ermittelt, in dem das Objekt eine Zeichenkette aufweist. Um die Effizienz zu erhöhen, kann dem ersten neuronalen Netz dabei ein Ausschnitt des bereitgestellten Bildes an der ermittelten Position zur Verfügung gestellt werden. Mit anderen Worten kann mithilfe des ersten neuronalen Netzes ein Bereich, in dem das Objekt eine Zeichenkette aufweist, in einem Ausschnitt des Bilds an der ermittelten Position ermittelt werden. Das erste neuronale Netz ist dabei zweckmäßigerweise spezifisch auf das Ermitteln eines eine Zeichenkette enthaltenden Bereichs in einem kleinen Bildausschnitt trainiert. Das erste neuronale Netz muss die Zeichenkette dabei nicht lesen können. Insofern ist es vorteilhaft, dass das erste neuronale Netz mit Bildern trainiert ist oder wird, in denen Zeichenketten in einer Vielzahl von Ausrichtungen, d. h. mit einer Vielzahl von Verzerrungen, Krümmungen, Drehungen und/oder dergleichen, dargestellt sind.

In einem optionalen Prüfschritt S4 wird geprüft, ob die Zeichenkette im ermittelten Bereich eine vorgegebene Ausrichtung aufweist. Die vorgegebene Ausrichtung kann zum Beispiel eine horizontale und linienartige Ausrichtung sein.

Ist dies nicht der Fall, wird die Ausrichtung der Zeichenkette in einem Korrekturschritt S5 in die vorgegebene Ausrichtung transformiert. Dazu kann der gesamte im Zeichenerkennungsschritt S3 ermittelte Bereich einer Transformation unterzogen werden, etwa durch Multiplikation mit einer entsprechenden Transformationsmatrix, welche eine ermittelte Ausrichtung der Zeichenkette auf dem Objekt in die vorgegebene Ausrichtung transformiert. Diese Transformationsmatrix kann als Teil des Korrekturschritts S5 ausgehend von der ermittelten Ausrichtung der Zeichenkette berechnet werden.

Nach erfolgter Transformation oder wenn im Prüfschritt S4 bereits festgestellt wurde, dass die Zeichenkette die vorgegebene Ausrichtung aufweist, wird in einem Leseschritt S6 mithilfe eines zweiten neuronalen Netzes die Zeichenkette gelesen. Das zweite neuronale Netz ist oder wird hierfür zweckmäßigerweise spezifisch mit Bildern trainiert, welche Zeichenketten in der vorgegebenen Ausrichtung zeigen. Dadurch können auch dann noch gute Ergebnisse erzielt werden, wenn der Untergrund, auf dem die Zeichenkette angeordnet ist, sehr unregelmäßig ausgebildet ist. Zum Beispiel kann das zweite neuronale Netz nach der Transformation im Korrekturschritt S5 auch auf die Stirnseite einer Coil aufgedruckte oder aufgesprühte Identifikationsnummern lesen, obwohl die Stirnseite der Coil sehr unregelmäßig mit Vertiefungen und Erhebungen von zum Beispiel weniger als 1 mm, maximal wenigen Millimetern, ausgebildet ist.

Nach dem Lesen der Zeichenkette kann durch erneutes Ausführen des Verfahrensschritts S1 ein weiteres Bild aus dem Bildstrom herausgegriffen werden. Im darauffolgenden Objekterkennungsschritt S2 kann nun zusätzlich geprüft werden, ob das beim vorigen Durchführen des Objekterkennungsschritts S2 erkannte und mit den weiteren Schritten S3-S6 analysierte Objekt noch auf dem Bild erkennbar ist. Ist dies der Fall, wird eine Schrittfolge aus dem Objekterkennungsschritt S2, dem Zeichenerkennungsschritt S3, dem Prüfschritt S4, dem Korrekturschritt S5 und dem Leseschritt S6 abermals ausgeführt. Diese Iteration der Schritte S1-S6 kann so lange durchgeführt werden, bis das Objekt im Objekterkennungsschritt S2 nicht mehr auffindbar ist. Alternativ kann die Iteration der Schritte S1-S6 so lange ausgeführt werden, bis ein Zeit- oder Framelimit erreicht oder überschritten wird, oder bis das Objekt mit hinreichender Sicherheit richtig identifiziert wurde. Dazu kann die jeweils gelesene Zeichenfolge mit einer Liste abgeglichen werden, wie im Folgenden noch im Zusammenhang mit Verfahrensschritt S8 beschreiben wird. In diesem Fall wird der Verfahrensschritt S8 nach dem Verfahrensschritt S6 ausgeführt. Gegebenenfalls kann dann auch der gesamte Block mit den Verfahrensschritten S7-S10 zwischen den Schritten S6 und S1 durchgeführt werden. Die im Leseschritt S6 gelesene Zeichenkette wird zweckmäßigerweise bei jeder Iteration gespeichert.

Die Beurteilung in Objekterkennungsschritt S2, ob das zuvor erkannte und analysierte Objekt noch auf dem Bild erkennbar ist, kann durch sogenanntes "Tracken" des Objekts in aufeinanderfolgend verarbeiteten Bildern erfolgen. Dazu werden zweckmäßigerweise die im Objekterkennungsschritt S2 ermittelten Positionen miteinander verknüpft, sodass sich eine Trajektorie des Objekts durch das Bild ergibt. Die Prüfung, ob das zuvor erkannte und analysierte Objekt noch erkennbar ist und/oder das Tracking müssen dabei nicht zwingend vom dritten neuronalen Netz durchgeführt werden. Vielmehr kann ein dediziertes Trackingmodul vorgesehen sein, welches zumindest eine dieser Aufgaben auf Grundlage, der durch das dritte neuronale Netz ermittelten Position des Objekts übernimmt.

Im vorliegenden Beispiel wird, nachdem das Objekt nicht mehr weiter getrackt werden kann, in einem weiteren, optionalen Ermittlungsschritt S7 die Identifikationsinformation auf Grundlage aller für das Objekt gelesenen Zeichenketten ermittelt. Dazu können diese Zeichenketten im Ermittlungsschritt S7 miteinander verglichen werden. Insbesondere können die Zeichenketten, insbesondere deren Häufigkeit, statistisch analysiert werden. Beispielsweise kann eine Häufigkeitsverteilung ermittelt werden, die angibt, welche Zeichenkette wie oft gelesen wurde. Als Identifikationsinformation wird dann zweckmäßigerweise ein Maximum der Häufigkeitsverteilung, d. h. die am häufigsten gelesene Zeichenkette, ermittelt.

Alternativ kann im Ermittlungsschritt S7 auch die Häufigkeit einzelner Zeichen der gelesenen Zeichenketten analysiert werden. Beispielsweise kann für jede Stelle der Zeichenketten eine Häufigkeitsverteilung ermittelt werden, die angibt, welches Zeichen an der entsprechenden Stelle wie oft erkannt wurde. Als Identifikationsinformation wird zweckmäßigerweise eine Zeichenkette ermittelt, in der jedes Zeichen durch das Maximum der Häufigkeitsverteilung, die der entsprechenden Stelle in der Zeichenkette zugeordnet ist, bestimmt ist. Mit anderen Worten setzt sich die als Identifikationsinformation zweckmäßigerweise aus denjenigen Zeichen zusammen, die an der entsprechenden Stelle der Zeichenkette am häufigsten erkannt wurden.

Eine derartige, auf der Häufigkeit von Zeichenketten oder einzelner Zeichen in diesen Ketten basierende Ermittlung der Identifikationsinformation ist aber nicht zwingend. Grundsätzlich sind auch andere Ansätze zur Ermittlung der Identifikationsinformation aus den mehreren Zeichenketten denkbar, zum Beispiel auf der Grundlage von Levenshtein-Distanzen zu einer von mehreren vorgegebenen Zeichenketten aus einer Liste.

In einem optionalen Authentifizierungsschritt S8 kann die ermittelte Identifikationsinformation mit vorgegebenen Zeichenketten aus einer solchen Liste verglichen werden. Beispielsweise kann zur Validierung der Identifikationsinformation geprüft werden, ob die ermittelte Identifikationsinformation mit einer von mehreren der vorgegebenen Zeichenketten übereinstimmt.

Kann die ermittelte Identifikationsinformation validiert werden, wird die Identifikationsinformation zweckmäßigerweise in einem weiteren Verfahrensschritt S9 ausgegeben. Dabei kann der Identifikationsinformation vor der Ausgabe eine Information darüber hinzugefügt werden, ob die Identifikationsinformation in der Liste enthalten ist.

Kann die ermittelte Identifikationsinformation dagegen nicht validiert werden, d. h. stimmt sie nicht mit einer der vorgegebenen Zeichenketten überein, kann ein Prozess, der auf einer Verwendung eines durch eine der in der Liste enthaltenen Zeichenketten gekennzeichneten Objekts basiert, in einem weiteren Verfahrensschritt S10 unterbrochen werden. Alternativ kann der Prozess an die Verwendung des durch die ermittelte Identifikationsinformation gekennzeichneten Objekts in Verfahrensschritt S10 angepasst werden.

Alternativ oder zusätzlich kann es zweckmäßig sein, die Identifikationsinformation in Verfahrensschritt S9 auszugeben, auch wenn die ermittelte Identifikationsinformation nicht validiert werden kann, zum Beispiel um Bedienpersonal entsprechend zu informieren.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: System
- 2, 2a, 2b: Identifikationsinformation
- 3, 3a, 3b: Objekt
- 4: Objekterfassungsvorrichtung
- 5: Bild
- 6: drittes neuronales Netz
- 7, 7a, 7b: Position
- 8: erstes neuronales Netz
- 9: Bereich
- 10: Zeichenkette
- 11: Prüfmodul
- 12: Korrekturmodul
- 13: zweites neuronales Netz
- 14: Schnittstelle
- 15: Rechenvorrichtung
- 16: Transportweg
- 17: Erfassungsbereich
- 18: Transportvorrichtung
- 19: Gleis
- 20: Lage
- 21: vorgegebene Ausrichtung

- 100: Verfahren
- S1, S9, S10: Verfahrensschritte
- S2: Objekterkennungsschritt
- S3: Zeichenerkennungsschritt
- S4: Prüfschritt
- S5: Korrekturschritt
- S6: Leseschritt
- S7: Ermittlungsschritt
- S8: Authentifizierungsschritt

- T: Transformation

## Patentansprüche

1. Verfahren (100) zum automatisierten Erkennen einer Identifikationsinformation (2; 2a, 2b) auf einem Objekt (3; 3a, 3b), aufweisend die Schritte:
- Bereitstellen (S1) wenigstens eines digitalen Bildes (5), auf dem an einer Position (7; 7a, 7b) ein Objekt (3; 3a, 3b) abgebildet ist;
- an der Position (7; 7a, 7b) des Objekts (3; 3a, 3b) im Bild (5), Ermitteln eines Bereichs (9), in dem das Objekt (3; 3a, 3b) eine Zeichenkette (10) aufweist, mithilfe eines ersten neuronalen Netzes (8) in einem Zeichenerkennungsschritt (S3);
- Transformieren (T) der Zeichenkette (10) in eine vorgegebene Ausrichtung (21) in einem Korrekturschritt (S5);
- Lesen der Zeichenkette (10) in der vorgegebenen Ausrichtung (21) mithilfe eines zweiten neuronalen Netzes (13) in einem Leseschritt (S6); und
- Ausgeben (S9) einer auf der gelesenen Zeichenkette (10) basierenden Identifikationsinformation (2; 2a, 2b) des Objekts (3; 3a, 3b).

2. Verfahren (100) nach Anspruch 1, wobei in einem Authentifizierungsschritt (S8) geprüft wird, ob die gelesene Zeichenkette (10) und/oder die Identifikationsinformation (2; 2a, 2b) mit einer von mehreren vorgegebenen Zeichenketten aus einer Liste übereinstimmt.

3. Verfahren (100) nach Anspruch 2, wobei die Identifikationsinformation (2; 2a, 2b) zunächst in einem Ermittlungsschritt (S7) auf Grundlage der gelesenen Zeichenkette (10) ermittelt und der ermittelten Identifikationsinformation (2; 2a, 2b) nach dem Authentifizierungsschritt (S8) eine Information darüber hinzugefügt wird (S9), ob die gelesene Zeichenkette (10) und/oder die Identifikationsinformation (2; 2a, 2b) in der Liste enthalten ist.

4. Verfahren (100) nach einem der Ansprüche 2 oder 3, wobei die Identifikationsinformation (2; 2a, 2b) bei einer Prüfung, ob eine Reihenfolge zumindest eines Teils, der mehreren vorgegebenen Zeichenketten mit einer Reihenfolge übereinstimmt, die sich aus in früheren Leseschritten bereits gelesenen Zeichenketten (10) ergibt, berücksichtigt wird.

5. Verfahren (100) nach einem der Ansprüche 2 bis 4, wobei die Liste mit den mehreren vorgegebenen Zeichenketten in Abhängigkeit der Identifikationsinformation (2; 2a, 2b) modifiziert wird (S10).

6. Verfahren (100) nach einem der vorangehenden Ansprüche, wobei das wenigstens eine Bild (5) aus einem Bildstrom herausgegriffen wird.

7. Verfahren (100) nach Anspruch 6, wobei eine Schrittfolge zumindest aus, Zeichenerkennungsschritt (S3), Korrekturschritt (S5) und Leseschritt (S6) mehrmals hintereinander für verschiedene aus dem Bildstrom herausgegriffene Bilder (5) durchgeführt und die Identifikationsinformation (2; 2a, 2b) auf Grundlage der in den mehreren Leseschritten (S6) gelesenen Zeichenketten (10) ermittelt wird.

8. Verfahren (100) nach Anspruch 7, wobei die Identifikationsinformation (2; 2a, 2b) auf Grundlage eines Vergleichs der in den mehreren Leseschritten (S6) gelesenen Zeichenketten (10) untereinander ermittelt wird.

9. Verfahren (100) nach Anspruch 7 oder 8, wobei
- eine Häufigkeit von unterschiedlichen, in den mehreren Leseschritten (S6) gelesenen Zeichenketten (10) oder eine Häufigkeit von unterschiedlichen, in den mehreren Leseschritten (S6) gelesenen Zeichenketten (10) an derselben Stelle vorkommenden Zeichen ermittelt wird und
- die Identifikationsinformation (2; 2a, 2b) auf Grundlage der ermittelten Häufigkeit ermittelt wird.

10. Verfahren (100) nach Anspruch 7, wobei eine Distanz in einer Metrik auf dem Raum der Symbolsequenzen für jede der in den mehreren Leseschritten (S6) gelesenen Zeichenketten (10) zu jeder von mehreren vorgegebenen Zeichenketten aus einer Liste ermittelt und die Identifikationsinformation (2; 2a, 2b) in Abhängigkeit der ermittelten Distanzen ermittelt wird.

11. Verfahren (100) nach einem der vorangehenden Ansprüche, wobei in einem Objekterkennungsschritt (S2) die Position des Objekts (3; 3a, 3b) auf dem Bild (5) mithilfe eines dritten neuronalen Netzes (6) ermittelt wird.

12. Verfahren (100) nach Anspruch 11 und einem der Ansprüche 6 bis 10, wobei wenigstens der Objekterkennungsschritt (S2) mehrmals hintereinander für verschiedene Bilder (5) aus dem Bildstrom durchgeführt und die in den Objekterkennungsschritten (S2) ermittelten Positionen (7; 7a, 7b) zur Nachverfolgung des Objekts (3; 3a, 3b) miteinander verknüpft werden.

13. Verfahren (100) nach einem der vorangehenden Ansprüche, wobei in einem Prüfschritt (S4) geprüft wird, ob die Zeichenkette (10) im ermittelten Bereich (9) die vorgegebene Ausrichtung (21) aufweist, und die Transformation im Korrekturschritt (S5) in Abhängigkeit eines Ergebnisses der Prüfung im Prüfschritt (S4) durchgeführt wird.

14. Verfahren (100) nach einem der vorangehenden Ansprüche, wobei die Zeichenkette (10) im Korrekturschritt (S5) zeilenförmig ausgerichtet wird.

15. System (1) zum automatisierten Erkennen einer Identifikationsinformation (2; 2a, 2b) auf einem Objekt (3; 3a, 3b), aufweisend
- eine Objekterfassungsvorrichtung (4) zum Bereitstellen wenigstens eines digitalen Bilds (5), auf dem an einer Position (7; 7a, 7b) ein Objekt (3; 3a, 3b) abgebildet ist;
- ein erstes neuronales Netz (8), das zum Ermitteln eines Bereichs (9), in dem das Objekt (3; 3a, 3b) eine Zeichenkette (10) aufweist, an der Position (7; 7a, 7b) des Objekts (3; 3a, 3b) trainiert ist,
- ein Korrekturmodul (12) zum Transformieren (T) der Zeichenkette (10) in eine vorgegebene Ausrichtung (21),
- ein zweites neuronales Netz (13), das zum Lesen der Zeichenkette (10) in der vorgegebenen Ausrichtung (21) trainiert ist, und
- eine Schnittstelle (14) zum Ausgeben einer auf der gelesenen Zeichenkette (10) basierenden Identifikationsinformation (2; 2a, 2b) des Objekts (3; 3a, 3b).
